# EUROPÄISCHE PATENTANMELDUNG

(11) **EP 4 524 397 A1**
(43) Veröffentlichungstag der Anmeldung: **19.03.2025**
(21) Anmeldenummer: 23020425.7
(22) Anmeldetag: 12.09.2023
(51) Int. Cl.: F04B 15/08, F04B 37/18, F04B 39/06, F04B 41/06, F17C 5/04

(54) **ANLAGE ZUM VERDICHTEN, SPEICHERN UND BEREITSTELLEN VON GAS UND ENTSPRECHENDES VERFAHREN**

(71) Anmelder: Linde GmbH, 82049 Pullach (DE)
(72) Erfinder: Kropf, Annika, 82049 Pullach (DE); Fahrner, Daniel, 82049 Pullach (DE); Vidic, Karl Jojo, 82049 Pullach (DE)
(74) Vertreter: Zahn, Christoph

(57) **Zusammenfassung**

Die Erfindung betrifft ein Verfahren zum Verdichten und Bereitstellen von Gas, insbesondere Wasserstoff, wobei erhaltenes Gas (a) mittels einer Verdichtungseinrichtung (140) mit einer oder mehreren Verdichterstufen verdichtet, und das verdichtete Gas (b) einem Speicher- und/oder Druckregelsystem (120) zugeführt wird, und wobei von dem Speicher- und/oder Druckregelsystem (120) bereitgestelltes Gas (d) einer Bereitstellungsvorrichtung (130) zur weiteren Verwendung, insbesondere zur Abgabe an ein Fahrzeug, zugeführt wird, wobei mittels einer Kältemaschine (15), mittels eines Kühlmittelkreislaufes (e, f, g, h) Gas nach der einen oder nach zumindest einer der mehreren Verdichterstufen und die Verdichtungseinrichtung gekühlt werden, und wobei mittels der Kältemaschine (15) weiterhin die Bereitstellungsvorrichtung (130) gekühlt wird.

## Beschreibung

Die Erfindung betrifft ein Verfahren zum Verdichten, ggf. Speichern, und Bereitstellen oder Überströmen von Gas, insbesondere Wasserstoff, sowie eine Anlage hierzu, z.B. eine Wasserstofftankstelle.

Wasserstoff, der als Treibstoff für Fahrzeuge verwendet wird, kann über sog. Wasserstofftankstellen bereitgestellt werden. Es können zwei Arten von Wasserstofftankstellen unterschieden werden: Die erste Art nutzt flüssigen Wasserstoff als Quelle und verdichtet den Wasserstoff in flüssiger Form. Die zweite Art hingegen hat eine gasförmige Wasserstoffquelle und verdichtet den Wasserstoff gasförmig, d.h. die Tankstelle wird mit gasförmigem Wasserstoff versorgt, und dieser wird gasförmig verdichtet und meist auch gespeichert.

Zudem können bei einer Wasserstofftankstelle zwei grundlegende Systembereiche unterschieden werden. Der erste Systembereich betrifft die Verdichtung des Wasserstoffes inklusive der Verdichterkühlung zum Abführen der Verdichtungserwärmung über Wärmetauscher und die Speicherung des Wasserstoffs (meistens in speziellen Wasserstoffspeicherflaschen bei zwischen 450 und 900 bar Speicherdruck). Beim zweiten Systembereich geht es um die Befüllung des Wasserstoffs in Fahrzeugtanks. Er umfasst z.B. eine Speicherbankensteuerung, eine (weitere) Kühlung über Wärmetauscher, um den Wasserstoff für die Betankung zu konditionieren, und einen Wasserstoffdispenser mit dem dazugehörigen Betankungsequipment wie beispielsweise Abreiß- und Betankungskupplung sowie den Betankungsschlauch.

Bei Wasserstofftankstellen zweiter Art oder vergleichbaren Anlagen sind in der Regel erhebliche Mengen an Energie nötig, um bei der Verdichtung freiwerdende Wärme abzuführen, zumal andernfalls Verdichterkomponenten früher verschleißen und so die Standzeiten reduziert werden. Vor diesem Hintergrund stellt sich die Aufgabe, das Verdichten von Gas bzw. den Betrieb einer entsprechenden Anlage möglichst energieeffizient und ressourcenschonend zu gestalten.

### Offenbarung der Erfindung

Diese Aufgabe wird durch ein Verfahren und eine Anlage zum Verdichten und Bereitstellen von Gas mit den Merkmalen der unabhängigen Patentansprüche gelöst. Bevorzugte Ausgestaltungen sind Gegenstand der abhängigen Patentansprüche sowie der nachfolgenden Beschreibung.

### Vorteile der Erfindung

Die Erfindung beschäftigt sich mit dem Verdichten, ggf. Speichern, und Bereitstellen von Gas sowie entsprechenden Anlagen und deren Betrieb. Wie eingangs erwähnt, kommen insbesondere Wasserstofftankstellen als solche Anlagen in Betracht, wobei von der Erfindung insbesondere Wasserstofftankstellen der zweiten Art, also Tankstellen mit gasförmiger Verdichtung, profitieren. Nachfolgend soll die Erfindung daher insbesondere in Bezug auf Wasserstofftankstellen beschrieben werden, grundsätzlich lässt sich das Prinzip aber auch auf andere Anlagen zum Verdichten von Gas, z.B. mit anderen Arten von Gasen, oder auch für andere Verwendungszwecke, übertragen.

Wie erwähnt können bei Wasserstofftankstellen zwei grundlegende Systembereiche unterschieden werden. Der erste Systembereich betrifft die Verdichtung inkl. Kühlung der Verdichterabwärme, und die Wasserstoff-Speicherung. Der zweite Systembereich umfasst die Bereitstellung für die konkrete Verwendung, also die Vorkonditionierung (insbesondere Kühlung), den oder die Wasserstoffdispenser und das dazugehörige Betankungsequipment wie beispielsweise Abreiß- und Betankungskupplung sowie den Betankungsschlauch.

Die vorliegende Erfindung hat vor allem Verbesserungen im ersten Systembereich zum Ziel, verbindet allerdings die beiden Systembereiche, indem die Wasserstoffkühlung, die ja in beiden Systembereichen notwendig ist, nicht mehr mit verschiedenen Kältemaschinen/Kühlern ausgeführt wird, sondern mit einer leistungsstarken Kältemaschine. Dadurch können Synergien genutzt werden.

### Die Einflüsse der Gastemperatur bei der Verdichtung

Bei einer Wasserstofftankstelle zweiter Art wird Wasserstoff in der Regel mehrstufig (typischerweise zwischenstufen- sowie zylindermantelgekühlt) auf bis zu 1000 bar verdichtet und in Mittel- und/oder Hochdruckbanken bei z.B. zwischen 300 und 100 bar oder auch zwischen 450 und 1000 bar gespeichert, um den Wasserstoff für die Betankung von PKWs, Bussen und Nutzfahrzeugen bei ausreichendem Druck bereitzustellen.

Neben rotierenden Verdichtersystemen werden häufig mehrstufige Kolbenverdichter zur Kompression von gasförmigem Wasserstoff herangezogen. Dabei ist ein effizienter Verdichtungsprozess und eine hohe Standzeit der technischen Komponenten nicht zuletzt aus technoökonomischen Gründen äußerst vorteilhaft.

Sowohl geschmierte als auch nicht geschmierte Kolbenverdichter müssen in der Regel ein ausreichend gutes Dichtungssystem zwischen Hoch- und Niederdruckseite der Verdichterstufen aufweisen. Diese Dichtungssysteme werden typischerweise aus Polymeren wie PUR oder PTFE hergestellt und sind innerhalb bestimmter Temperaturgrenzen einsatzfähig. Werden diese Temperaturgrenzen überschritten, kommt es zu erhöhtem Verschleiß und die Standzeit sinkt erheblich. Um diesem Effekt gegenzusteuern, sollte die bei der Kompression anfallende Wärme so effizient und ressourcenschonend wie möglich aus dem System abgeführt werden.

Die Anzahl der Verdichterstufen der Kolbenkompressoren ist an sich nicht begrenzt, wenngleich z.B. drei oder vier zweckmäßig sein können. Es wird mittels einer Kältemaschine über einen Kühlmittelkreislauf Gas, also z.B. Wasserstoff, nach zumindest der einen oder einer der mehreren Verdichterstufen gekühlt. Es ist zweckmäßig nach jeder Verdichterstufe, also auch jeweils zwischen zwei Verdichterstufen, zu kühlen. Dabei können geeignete Wärmetauscher vorgesehen sein. Zudem wird mittels des Kühlmittelkreislaufes auch die Verdichtungseinrichtung gekühlt. Dabei können z.B. eine oder mehrere Gehäusekomponenten der Verdichtungseinrichtung, insbesondere Einlässe für das Gas und/oder ein Antrieb, über den Kühlmittelkreislauf gekühlt werden.

### Kühlungsbedarf bei der Betankung

Beim Betanken eines Fahrzeugs am Dispenser der Wasserstofftankstelle wird der Wasserstoff bzw. allgemein das Gas in der Regel über einen steuerbaren Druckregler ("Druckrampenregler") betreffend Druck und Massenstrom gezielt vorkonditioniert, um die im Protokoll geforderten Druckerhöhungrate im Fahrzeugtank einzuhalten. Für die gängigen Normen (z.B. SAE J2601, JPEC-S0003, PRHYDE-Protokoll oder CEP-Protokoll) ist es in aller Regel erforderlich, das Gas (Wasserstoff) vor dem Betankungsvorgang auf Temperaturen von bis zu 233,15 K (bzw. -40°C) vorzukühlen. In allen für die Betankung relevanten Temperaturbereichen erwärmt sich gasförmiger Wasserstoff, aufgrund des negativen Joule-Thomson Effekts, im Zuge einer isenthalpen Entspannung. Das bedeutet auch, dass sich der Wasserstoff bei der Druckminderung nach dem Druckrampenregler erwärmt.

Bei einer Tankstelle der zweiten Art ist also einmal eine Verdichterkühlung und andererseits eine Vorkühlung im Rahmen der Konditionierung des Wasserstoffs für die Betankung notwendig. Letztere muss auf einen festgelegten Temperaturbereich kühlen, während im ersten Bereich (Verdichterkühler) eine stärkere Kühlung, auch zeitweise, vorteilhaft wäre.

Im Rahmen der vorliegenden Erfindung wird hierzu ein optimiertes Konzept einer Anlage zur Wasserstoff- oder allgemein Gaskompression vorgeschlagen, welches eine verlängerte Standzeit von thermisch belasteten Komponenten durch eine Temperaturabsenkung ebendieser Komponenten ermöglicht. Die standzeitverlängernden Auswirkungen können bevorzugt durch Temperaturmessungen, Herstellerangaben und Materialprüfung überprüft werden. Langfristig kann auf diese Weise dadurch ein "predictive maintenance"-Ansatz (vorausschauende Wartung) umgesetzt werden, der es erlaubt, die Notwendigkeit eines Komponentenaustausches nicht nur abhängig von Betriebsstunden, sondern auch vom durchlaufenen Temperaturprofil anzuzeigen.

Hierzu wird erhaltenes Gas, also z.B. Wasserstoff, mittels einer Verdichtungseinrichtung mit einer oder mehreren Verdichterstufen verdichtet, und das verdichtete Gas wird dann einem Speicher- und/oder Druckregelsystem zugeführt. Das Speicher- und/oder Druckregelsystem kann z.B. ein sog. Speicherbankenmanagement umfassen, sowie eine Druckrampenregelung. Im weiteren Verlauf kann das Gas dann z.B. über eine Bereitstellungseinrichtung oder einen Dispenser zur weiteren Verwendung, z.B. für das Betanken eines Fahrzeugs bereitgestellt werden. Bei beiden Schritten ist Kühlleistung notwendig, die im Rahmen der vorliegenden Erfindung von derselben Kältemaschine bereitgestellt wird.

Durch die gleichzeitige Verwendung der Kältemaschine sowohl zur Dispenserkühlung als auch für die Kühlung des Gases zwischen den Verdichterstufen sowie der Verdichtungseinrichtung (Verdichter) und dessen Komponenten selbst, ist eine effiziente Kühlung möglich. Dabei kann z.B. eine Pumpe oder Förderpumpe für den Kühlmittelkreislauf vorgesehen sein. Auf diese Weise ist es möglich, genauso viel Kälte in das System zur Verdichtung einzubringen, wie notwendig ist, um einen lebensdauererhöhenden Betrieb der Einzelkomponenten zu ermöglichen. Dies ist dadurch realisierbar, dass das geförderte Kältemittel (Kälteträgermedium) die Zwischenstufenwärmetauscher, die Zylinderkühlungen und den Kompressionsantrieb sowie ggf. weitere potentiell ungewünschte Wärmequellen kühlt.

In einer Ausführungsform wird Kühlmittel des Kühlmittelkreislaufes mittels eines Hauptwärmetauschers abgekühlt, und ebenso wird von dem Speicher- und/oder Druckregelsystem bereitgestelltes Gas mittels des Hauptwärmetauschers abgekühlt. Die Verwendung eines solchen Hauptwärmetauschers (neben Wärmetauschern zwischen den Verdichterstufen) erlaubt eine effiziente Kühlung nicht nur des Kühlmittels des Kühlmittelkreislaufes, sondern auch des Gases.

In einer Ausführungsform wird durch den Hauptwärmetauscher geführtes Kühlmittel und/oder durch den Hauptwärmetauscher geführtes Gas mittels der schon erwähnten Kältemaschine, insbesondere einer Kompressionskältemaschine, abgekühlt. Eine Kompressionskältemaschine, welche auf Durchschnittsleistung ausgelegt ist, kann z.B. über ein oder mehrere Expansionsventile ein Kältemittel wie z.B. CO2, Propan sowie weitere natürliche sowie F-Gase-haltige Kältemittel in den Hauptwärmetauscher einbringen. Dies erlaubt eine effiziente Kühlung.

In einer Ausführungsform ist ein Kühlmittel in dem Hauptwärmetauscher von dem Kühlmittel des Kühlmittelkreislaufes verschieden. Potentiell mögliche Kühlmittel (oder Kühlmedien) für die Zwischenstufen und Antriebskühlung (Verdichter) können sich also von jenem Kühlmittel unterscheiden, welches als Kälteträger im Hauptwärmetauscher enthalten ist. Dies kann z.B. dadurch realisiert werden, dass ein weiterer Rohrstrang in den Hauptwärmetauscher integriert wird und somit der Kühlmittelkreislauf zur Komponentenkühlung geschlossen wird.

In einer weiteren Ausführungsform wird Kühlmittel des Kühlmittelkreislaufes im Rücklauf vor dem Hauptwärmetauscher mittels eines Luftwärmetauschers meist auf Umgebungstemperatur abgekühlt. So kann das Kühlmittel (Kälteträgermedium), das nicht zur Dispenserkühlung verwendet wird, im Rücklauf vor dem Hauptwärmetauscher mittels eines Luftwärmetauschers annähernd auf Umgebungstemperatur abgekühlt werden, jedenfalls sofern dies möglich ist (dies gilt auch für die Unteroption mit unterschiedlichen Kühlmedien). Zusätzlich kann dieser Kältekreis durch entsprechende Absperrmittel oder Absperrorgane von dem Hauptwärmetauscher entkoppelt werden, falls die Systemtemperatur der thermisch verschleißanfälligen Komponenten innerhalb der Verdichtungseinrichtung durch die oben beschriebene Umgebungskühlung ausreichend abgekühlt werden können.

In einer Ausführungsform wird nach jeder der Verdichterstufen eine Temperatur des Gases mittels jeweils eines Temperatursensors erfasst. Alternativ oder zusätzlich können Temperaturen von Komponenten der Verdichtungseinrichtungen, also z.B. betroffenen Bauteile wie Zylinderwandungen, Hydrauliköl, und dergleichen, mittels jeweils eines Temperatursensors erfasst werden. Basierend auf den gemessenen bzw. erfassten Temperaturen (des Gases bzw. der Komponenten) und basierend auf einem Modell, wird dann ein Austausch von Komponenten vorhergesagt.

Durch die Temperatursensoren (oder Temperaturtransmitter), die z.B. Gas- bzw. Wasserstofftemperatur vor und/oder nach jeder Verdichterstufe messen, kann errechnet werden, welche Komponenten im Verdichtersystem für welche Dauer erhöhten Temperaturen ausgesetzt waren. Diese Temperaturen unterscheiden sich auch mit der stärkeren Kühlung der Zwischenstufen noch sehr stark von Stufe zu Stufe, was vom Verdichtungsverhältnis abhängt. Sie können zudem von Umgebungsbedingungen abhängen. Aufgrund von Erfahrungswerten und Studien der Komponentenhersteller kann ein Modell erstellt werden, das aufgrund der Temperaturhistorie der Komponente den nächsten notwendigen Austausch vorhersagt. Statt z.B. alle Dichtungen auszutauschen, kann sich so zeigen, dass nur wenige Dichtungen wirklich über längere Zeit höheren Temperaturen ausgesetzt waren, wobei auch der jeweilige Druck beim Messen der Temperatur in das Modell mit einbezogen werden kann. Dieses Vorgehen ähnelt einer Lastzykluszählung nach dem sog. Rainflow-Algorithmus, setzt aber einen Schwerpunkt auf die Temperaturhistorie.

Mit dem vorgeschlagen Verfahren bzw. der entsprechenden Anlage wird insbesondere eine thermische Entlastung von Systemkomponenten wie z.B. der Kolbendichtungen oder des Hydrauliksystems erreicht. So bestehen Dichtungssysteme in der Regel aus PUR oder PTFE und weisen erhöhten Verschleiß bei verstärkter thermischer Belastung auf. Durch die Abkühlung des Gases am jeweiligen Zylindereintritt und einer Kühlung der Zylindermäntel kann deren Standzeit signifikant verlängert werden.

Dasselbe gilt für die Kühlung des Verdichterantriebs, speziell im Falle von hydraulisch betriebenen Verdichtern, da kommerziell verfügbare Hydrauliköle einen begrenzten Viskositätsbereich aufweisen und Hydraulikantriebe wie beispielsweise Radial- oder Axialkolbenkompressoren auf einen thermisch begrenzten Viskositätsbereich angewiesen sind. Eine hohe thermische Belastung dieser Öle führt nicht zuletzt zu verkürzten Ölfilter- und/oder Ölwechselintervallen. Dies ist dadurch bedingt, dass bewegte Bauteile nicht im empfohlenen Viskositätsbereich betrieben werden und der mechanische Abrieb zunimmt.

Ein weiterer Vorteil liegt darin, dass die Kühlung nicht auf die Umgebungstemperatur beschränkt ist und eine gemeinsame Kältemaschine und daher ein gemeinsamer Kältekreislauf der gesamten Anlage dargestellt werden kann. Dies führt durch eine modulare Systembauweise und eine kostenoptimierte Ausführungsform von Anlagen wie Wasserstoffbetankungsstationen zu einem besondere Kostenvorteil.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

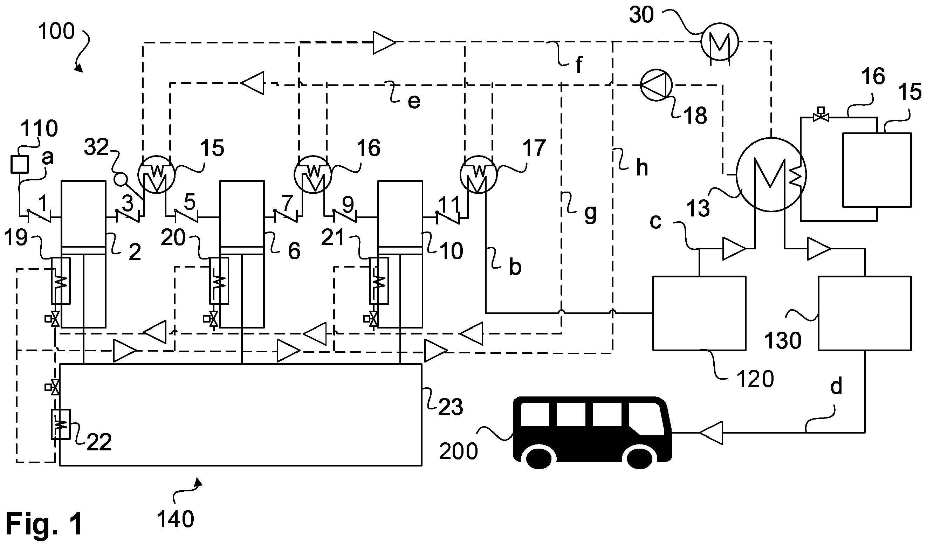

- Figur 1: zeigt schematisch eine erfindungsgemäße Anlage in einer bevorzugten Ausführungsform.

### Ausführliche Beschreibung der Zeichnung

In Figur 1 ist schematisch eine erfindungsgemäße Anlage 100 in einer bevorzugten Ausführungsform dargestellt, mittels welcher auch ein erfindungsgemäßes Verfahren durchführbar ist. Es handelt sich hierbei um ein vereinfachtes Verfahrensschema. Dabei ist insbesondere ein konkretes Beispiel für eine als Wasserstofftankstelle ausgebildete Anlage 100 mit einem mehrstufigen Kolbenverdichter als Verdichtungseinrichtung 140 und einem Speicher- und/oder Druckregelsystem 120 gezeigt. Ein Antrieb 23 des Kolbenverdichters 140 kann z.B. sowohl mechanisch, hydraulisch als auch pneumatisch ausgeführt sein kann.

In dem in Figur 1 dargestellten Fall einer Betankung eines Fahrzeugs 200 wird die Anlage 100 aus einer Quelle 110 wie beispielsweise einer Elektrolyse, einer Pipeline, einem Trailer oder einem vergleichbaren System mit Wasserstoff, hier als Strom a gezeigt, versorgt. Es versteht sich, dass in aller Regel zwischen der Quelle 110 und dem Kolbenverdichter 140 noch verschiedene Komponenten oder Einbauten vorgesehen oder auch notwendig sein können (z.B. Eingangspuffer, Druckregler, Sensorik, etc.), die hier jedoch nicht gezeigt und für die vorliegende Erfindung auch nicht weiter relevant sind.

Der erhaltene Wasserstoff a tritt dann z.B. über ein Einlassventil 1 in den Kolbenverdichter 140 bzw. dort eine erste Kolbeneinheit oder Zylinderstufe 2 ein. Nachdem der Wasserstoff in der ersten Zylinderstufe 2 komprimiert worden ist, gelangt der über das Auslassventil 3 in einen Wärmetauscher 15. Dieser entzieht dem verdichteten Wasserstoff so viel Wärmeenergie, sodass es im Zuge der weiteren Verdichtung durch die darauffolgenden Verdichterstufen 6 und 10 zu keiner thermischen Überbelastung der entsprechenden Bauteile kommen kann. Für die Verdichterstufe 6 sind ein Einlassventil 5 und ein Auslassventil 7 vorgesehen, für die Verdichterstufe 10 sind ein Einlassventil 9 und ein Auslassventil 11 vorgesehen.

Die Anzahl der Verdichterstufen ist im Beispiel mit drei dargestellt, wobei diese Anzahl mindestens eins ist und nach oben hin prinzipiell nicht begrenzt ist. Denkbar sind z.B. auch vier, fünf, sechs oder mehr Verdichterstufen, oder aber z.B. auch nur ein oder zwei. Generell wird dem Wasserstoff nach jedem Verdichtungsschritt Wärme entzogen.

Nach dem Wärmetauscher 17 der letzten Verdichterstufe 10 gelangt der Wasserstoff, hier als Strom b bezeichnet, z.B. in ein sog. Bankenmanagement (für Speicherbanken), welches dazu dient, sowohl eine Befüllung der Speicherkaskaden durch den Verdichter als auch eine kaskadierte Betankung eines Wasserstofffahrzeuges 200 oder eine Mischform der beiden Betriebsweisen zu ermöglichen. Der Einfachheit halber umfasst das Speicher- und/oder Druckregelsystem 12 sowohl das Bankenmanagement als auch die Speicherkaskaden, welche z.B. entweder Mittel- oder Hochdruckspeicher oder einer Kombination aus beiden umfassen können.

Insbesondere weist das Speicher- und/oder Druckregelsystem 12 eine Druckrampenregelung auf, welche eine gezielte Fahrzeugbetankung gemäß der gültigen Regelwerke und Betankungsnormen (z.B. SAE J2601, CEP oder PRHYDE*) ermöglicht. Die durch die Druckregelung freiwerdende Wärme wird über einen Hauptwärmetauscher 13 (Wärmetauschersystem) rückgekühlt und dem Wasserstoffdispenser bzw. einer Bereitstellungsvorrichtung 130 zugeführt, womit ein Fahrzeug 200 betankt werden kann (vgl. Strom d).

Der Hauptwärmetauscher 13 kann mit einem Kälteträgermedium oder Kühlmittel (z.B. Antifrogen oder Freezium oder einem Gemisch aus Wasser und Glycol) gefüllt sein, um die in einem gewissen Zeitintervall durch die Betankungen anfallende Wärme aufzunehmen und somit dem erwärmten Wasserstoff zu entziehen. Eine Kompressionskältemaschine 15, welche auf Durchschnittsleistung ausgelegt ist, bringt über ein oder mehrere Expansionsventile 16 ein herkömmliches Kältemittel in den Hauptwärmetauscher 13 ein und kühlt somit das Kühlmittel (Kälteträgermedium), welches dazu verwendet wird, die im Hauptwärmetauscher 13 enthaltenen Wasserstoffleitungen (Strom c) inklusive des darin geförderten Wasserstoffs abzukühlen.

Mittels einer Förderpumpe 18 wird Kühlmittel in einem Kühlmittelkreislauf (e, f, g, h; konkret Vorlauf e und Rücklauf f für die Verdichterstufen sowie Vorlauf g und Rücklauf h für die Verdichtungseinrichtung selbst) genauso viel Kälte in die Verdichtungseinrichtung eingebracht, wie notwendig ist, um eine lebensdauererhöhende Fahrweise der Einzelkomponenten zu ermöglichen. Dies ist dadurch realisierbar, dass das durch Pumpe 18 geförderte Kühlmittel die Zwischenstufenwärmetauscher 15, 16 und 17, die Zylinderkühlungen 19, 20 und 21 und den Verdichterantrieb über eine Kühlung 22 sowie weitere potentiell ungewünschte Wärmequellen kühlt.

Mögliche Kühlmittel für die Zwischenstufen (Wärmetauscher 15, 16, 17) und Antriebskühlung (Wärmetaucher 19, 20, 21, 22) können sich von jenem Kühlmittel unterscheiden, welches als Kälteträger im Hauptwärmetauscher 13 enthalten ist. Dies kann z.B. dadurch realisiert werden, dass ein weiterer Rohrstrang (bzw. eine geeignete Leitung) stromabwärts des Wärmetauschers 15 und Stromaufwärts der Pumpe 18 in den Hauptwärmetauscher 13 integriert wird und somit der Kältekreislauf zur Komponentenkühlung geschlossen wird.

Ebenso kann das Kühlmittel, das nicht zur Dispenserkühlung verwendet wird, im Rücklauf vor dem Hauptwärmetausche 13 mittels eines Luftwärmetauschers 30 annähernd auf Umgebungstemperatur abgekühlt werden sofern dies möglich ist (dies gilt auch für die Unteroption mit unterschiedlichen Kühlmedien). Zusätzlich kann dieser Kältekreis durch entsprechende Absperrorgane von dem Hauptwärmetauscher 13 entkoppelt werden, falls die Systemtemperatur der thermisch verschleißanfälligen Komponenten innerhalb der Verdichteranlage, durch die oben beschriebene Umgebungskühlung ausreichend abgekühlt werden können.

Es lässt sich auch eine Predictive Maintenance implementieren. Durch Temperatursensoren oder Temperaturtransmitter, die die Wasserstofftemperatur vor und nach jeder Verdichterstufe messen, ggf. aber auch von weiteren Komponenten des Verdichters, kann errechnet werden, welche Komponenten im Gesamtverdichtersystem für welche Dauer erhöhten Temperaturen ausgesetzt waren. Beispielhaft ist hier nur ein Temperatursensor 32 nach der Verdicherstufe 2 angedeutet.

Diese Temperaturen unterscheiden sich auch mit der stärkeren Kühlung der Zwischenstufen noch sehr stark von Stufe zu Stufe. Sie hängen zudem von Umgebungsbedingungen ab. Aufgrund von Erfahrungswerten und Studien der Komponentenhersteller kann ein Modell erstellt werden, das aufgrund der Temperaturhistorie der Komponente den nächsten notwendigen Austausch vorhersagt. Statt z.B. alle Dichtungen auszutauschen kann sich so zeigen, dass nur wenige Dichtungen wirklich über längere Zeit höheren Temperaturen (druckabhängig) ausgesetzt waren.

## Patentansprüche

1. Verfahren zum Verdichten und Bereitstellen von Gas, insbesondere Wasserstoff,
wobei erhaltenes Gas (a) mittels einer Verdichtungseinrichtung (140) mit einer oder mehreren Verdichterstufen verdichtet, und das verdichtete Gas (b) einem Speicher- und/oder Druckregelsystem (120) zugeführt wird, und wobei von dem Speicher- und/oder Druckregelsystem (120) bereitgestelltes Gas (d) einer Bereitstellungsvorrichtung (130) zur weiteren Verwendung, insbesondere zur Abgabe an ein Fahrzeug, zugeführt wird,
wobei mittels einer Kältemaschine (15) mittels eines Kühlmittelkreislaufes (e, f, g, h) Gas nach der einen oder nach zumindest einer der mehreren Verdichterstufen und die Verdichtungseinrichtung gekühlt werden, und
wobei mittels der Kältemaschine (15) weiterhin die Bereitstellungsvorrichtung (130) gekühlt wird.

2. Verfahren nach Anspruch 1, wobei die Verdichtungseinrichtung (140) mehrere Verdichterstufen zum mehrstufigen Verdichten des Gases aufweist, und wobei über den Kühlmittelkreislauf Gas zwischen jeweils zwei Verdichterstufen und nach einer letzten der mehreren Verdichterstufen gekühlt wird.

3. Verfahren nach Anspruch 2, wobei nach jeder der mehreren Verdichterstufen eine Temperatur des Gases und/oder von Komponenten der Verdichtungseinrichtungen mittels jeweils eines Temperatursensors (32) erfasst wird, und wobei, basierend auf den mittels der Temperatursensoren erfassten Temperaturen und basierend auf einem Modell, ein Austausch von Komponenten vorhergesagt wird.

4. Verfahren nach einem der vorstehenden Ansprüche, wobei Kühlmittel des Kühlmittelkreislaufes mittels eines Hauptwärmetauschers (13) abgekühlt wird, und
wobei das von dem Speicher- und/oder Druckregelsystem (120) bereitgestellte und der Bereitstellungsvorrichtung (130) zugeführte Gas (c) mittels des Hauptwärmetauschers (13) abgekühlt wird.

5. Verfahren nach Anspruch 4, wobei durch den Hauptwärmetauscher (13) geführtes Kühlmittel und/oder durch den Hauptwärmetauscher (13) geführtes Gas mittels der Kältemaschine, insbesondere einer Kompressionskältemaschine, abgekühlt wird.

6. Verfahren nach Anspruch 4 oder 5, wobei ein Kühlmittel in dem Hauptwärmetauscher (13) von dem Kühlmittel des Kühlmittelkreislaufes verschieden ist.

7. Verfahren nach einem der Ansprüche 4 bis 6, wobei Kühlmittel des Kühlmittelkreislaufes im Rücklauf vor dem Hauptwärmetauscher mittels eines Luftwärmetauchers abgekühlt wird, insbesondere auf Umgebungstemperatur.

8. Verfahren nach einem der Ansprüche 4 bis 7, wobei der Kühlmittelkreislauf bei Bedarf mittels Absperrmittel von dem Hauptwärmetauscher abgekoppelt wird.

9. Verfahren nach einem der vorstehenden Ansprüche, wobei eine oder mehrere Gehäusekomponenten der Verdichtungseinrichtung (140), insbesondere Einlässe für das Gas und/oder ein Antrieb (41), über den Kühlmittelkreislauf gekühlt werden.

10. Anlage (100) zum Verdichten und Bereitstellen von Gas, insbesondere Wasserstoff, aufweisend eine Verdichtungseinrichtung (140) mit einer oder mehreren Verdichterstufen, ein Speicher- und/oder Druckregelsystem (120), eine Bereitstellungsvorrichtung (130) und eine Kältemaschine (15),
wobei die Anlage (100) eingerichtet ist, erhaltenes Gas (a) mittels der Verdichtungseinrichtung (140) zu verdichten, und das verdichtete Gas (b) dem Speicher- und/oder Druckregelsystem (120) zuzuführen,
wobei die Anlage (100) eingerichtet ist, das von dem Speicher- und/oder Druckregelsystem (120) bereitgestellte Gas der Bereitstellungsvorrichtung (130), insbesondere zur Abgabe an ein Fahrzeug (200), zuzuführen,
wobei die Anlage (100) weiterhin eine Kühlmittelkreislauf (e, f, g, h) aufweist, und eingerichtet ist, mittels der Kältemaschine (15) über den Kühlmittelkreislauf Gas nach der einen oder nach zumindest einer der mehreren Verdichterstufen zu kühlen, und über den Kühlmittelkreislauf die Verdichtungseinrichtung (140) zu kühlen, und mittels der Kältemaschine (15) die Bereitstellungsvorrichtung (130) z kühlen.

11. Anlage (100) nach Anspruch 10, wobei die Verdichtungseinrichtung (140) mehrere Verdichterstufen zum mehrstufigen Verdichten des Gases aufweist, und wobei die Anlage (100) eingerichtet ist, über den Kühlmittelkreislauf Gas zwischen jeweils zwei Verdichterstufen und nach einer letzten der mehreren Verdichterstufen zu kühlen, und
wobei die Anlage (100) weiterhin einen oder mehrere Temperatursensoren (32) aufweist, und eingerichtet ist, nach jeder der mehreren Verdichterstufen eine Temperatur des Gases und/oder von Komponenten der Verdichtungseinrichtungen mittels jeweils eines der Temperatursensoren (32) zu erfassen, und, basierend auf den mittels der Temperatursensoren erfassten Temperaturen und basierend auf einem Modell, einen Austausch von Komponenten vorherzusagen.

12. Anlage (100) nach Anspruch 10 oder 11, weiterhin aufweisend einen Hauptwärmetauscher (13), wobei die Anlage (100) eingerichtet ist, Kühlmittel des Kühlmittelkreislaufes mittels des Hauptwärmetauschers abzukühlen,
wobei die Anlage eingerichtet ist, das von dem Speicher- und/oder Druckregelsystem (120) bereitgestellte Gas mittels des Hauptwärmetauschers abzukühlen.

13. Anlage (100) nach einem der Ansprüche 10 bis 12, die als Wasserstofftankstelle ausgebildet ist.

14. Anlage (100) nach einem der Ansprüche 10 bis 13, die zum Durchführen eines Verfahrens nach einem der Ansprüche 1 bis 9 eingerichtet ist.
